Europäisches Patentamt

European Patent Office

Office européen des brevets

(19)

(11) Veröffentlichungsnummer: **0 163 095 B1**

## EUROPÄISCHE PATENTSCHRIFT

(12)

(45) Veröffentlichungstag der Patentschrift: **24.07.91**

(51) Int. Cl.⁵: **H04Q 7/04**

(21) Anmeldenummer: **85104647.4**

(22) Anmeldetag: **17.04.85**

(54) Funk-Personenrufsystem.

(30) Priorität: **26.04.84 DE 3415478**

(43) Veröffentlichungstag der Anmeldung:
**04.12.85 Patentblatt 85/49**

(45) Bekanntmachung des Hinweises auf die
Patenterteilung:
**24.07.91 Patentblatt 91/30**

(84) Benannte Vertragsstaaten:
**AT CH DE FR GB IT LI NL SE**

(56) Entgegenhaltungen:
**EP-A- 0 075 729**
**AT-B- 380 981**
**DE-A- 3 123 617**
**DE-A- 3 235 485**

**HASLER MITTEILUNGEN, Band 41. Nr. 3, September 1982, Seiten 53-57, Bern, CH; H. ZAHND: "Der Sender TI für drahtlose Personensuchsysteme Hasler DS-2000"**

**NACHRICHTEN ELEKTRONIK + TELEMATIK, Band 37, Nr. 2, Februar 1983, Seiten 48-54, Heidelberg, DE; M. HEINZ et al.: "Personenruf-Funkanlage für landesweite Rufnetze"**

(73) Patentinhaber: **ANT Nachrichtentechnik GmbH**
**Gerberstrasse 33**
**W-7150 Backnang(DE)**

(72) Erfinder: **Sperlich, Josef, Dipl.-Ing.**
**Kelterweg 52**
**W-7150 Backnang(DE)**

EP 0 163 095 B1

**Beschreibung**

Die Erfindung betrifft ein Funk-Personenrufsystem gemäß dem Oberbegriff des Patentanspruches 1. Ein solches System ist in der deutschen Offenlegungsschrift 31 23 617 beschrieben. Es besteht aus einer Funkrufzentrale, welche über mehrere Anpassungsübertragungen mit einem Fernsprechwählvermittlungsnetz verbunden ist. An die Funkrufzentrale ist ein Funkrufsender angeschlossen, der über einen Funkkanal in Funkkontakt mit den Funkrufempfängern steht. Es können auch mehrere Funkrufsender vorgesehen sein. Die Funkrufempfänger werden von den zu rufenden Personen mitgeführt.

Soll eine Person gerufen werden, so wird als Rufauftrag von einem an das Fernsprechwählvermittlungsnetz angeschlossenen Fernsprechapparat die Kennzahl der Funkrufzentrale und die Rufnummer der zu rufenden Person gewählt. Dadurch wird ein Rufsignal an den betreffenden Funkrufempfänger ausgesandt, wobei der Ruf am Funkrufempfänger akustisch ausgegeben wird. Die rufende Person kann eine Information für die gerufene Person in der Form einer Ziffernfolge nachwählen. Diese Ziffernfolge wird in einem Speicher des Funkrufempfängers gespeichert und an einem Anzeigefeld angezeigt. Durch die Speicherung der Information im Funkrufempfänger wird erreicht, daß der Funkkanal nur während der verhältnismäßig kurzen Zeit der Übertragung der Information belegt ist und trotzdem die Information noch längere Zeit nach ihrer Übertragung sichtbar ist.

Nachteilig ist, daß mit einer Ziffernfolge nur eine sehr beschränkte Informationsmöglichkeit besteht und daß die Bedeutung solcher Ziffernfolgen vorher vereinbart werden muß.

Eine gebräuchliche Vereinbarung ist z. B. die, daß die Ziffernfolge die Telefon-Nummer der rufenden Person ist und die gerufene Person diese Nummer anrufen soll.

Zwar ermöglicht das bekannte System zur zusätzlichen Information der gerufenen Person noch eine Sprachdurchsage. Da diese aber nur von der rufenden zur gerufenen Person möglich ist, kann sie weder zurückfragen noch den den Empfang bestätigen. Um trotzdem zu erreichen, daß die Sprachdurchsage richtig verstanden wird, muß die rufende Person langsam und deutlich sprechen und die Durchsage vorsichtshalber mehrmals wiederholen. Dadurch wird der Funkkanal verhältnismäßig lange belegt und doch nur eine verhältnismäßig geringe Wahrscheinlichkeit für den richtigen Empfang der Information erreicht.

Eine kurze Belegung des Funkkanals ist aber wichtig, da für den Bereich einer Funkrufzentrale nur ein einziger Funkkanal vorgesehen ist, so daß immer nur ein einziger Rufauftrag erledigt werden kann. Da sich ferner in einem Bereich viele Personen mit Funkrufempfänger aufhalten, können mehrere Rufaufträge gleichzeitig vorliegen. Da jeweils nur ein Rufauftrag ausgeführt werden kann, treten Wartezeiten auf. Diese sind umso länger und werden umso störender empfunden, je länger der Funkkanal für einen einzelnen Rufauftrag belegt ist.

Aufgabe der Erfindung ist es, ausgehend von dem bekannten Personen-Funkrufsystem ein solches anzugeben, welches eine über die Anzeige einer Ziffernfolge hinausgehende, auch ohne vorherige Vereinbarung verständliche Anzeige einer Information für die gerufene Person ermöglicht bei nur kurzzeitiger Belegung des Funkkanals und Anzeige dieser Information auch noch nach dem Freiwerden des Funkkanals.

Diese Aufgabe wird durch ein Personen-Funkrufsystem gemäß dem Patentanspruch 1 gelöst.

Ein Funkrufempfänger mit einem Anzeigefeld für alphanumerischen Zeichen ist an sich aus der europäischen Offenlegungsschrift EP-A-0 091 691 bekannt.

Die Daten-Teilnehmergeräte der Datenvermittlungsnetze weisen Tastaturen auf, die denen von Schreibmaschinen gleichen oder ähnlich sind, und über die Buchstaben, Ziffern sowie Satz- und Sonderzeichen, also alphanumerische Zeichen, eingegeben werden können. Durch den Anschluß der Funkrufzentrale an ein Datenvermittlungsnetz wird die Möglichkeit geschaffen, Rufaufträge an den Daten-Teilnehmergeräten eines solchen Datenvermittlungsnetzes einzugeben und dabei zur Information der gerufenen Person außer Ziffern auch aus Buchstaben sowie Satz- und Sonderzeichen bestehende Texte einzutasten. Solche Texte werden am Anzeigefeld des Funkrufempfängers angezeigt und sind auch ohne vorherige Vereinbarung verständlich.

Zwar sind die Datenvermittlungsnetze noch nicht so weit ausgebaut wie das Fernsprechwählvermittlungsnetz. Dies ist jedoch kein Nachteil, da die Wirtschaftskreise, welche solche Funk-Personenrufsysteme benutzen, üblicherweise auch jetzt schon über einen Anschluß an ein Datenvermittlungsnetz verfügen. Wenn aber ein solcher Anschluß nicht zur Verfügung steht, erweist sich der Anschluß an das Fernsprechwählvermittlungsnetz als Vorteil, da auf die Eingabe an einem Fernsprechapparat, allerdings mit der bekannten Beschränkung auf Ziffern, ausgewichen werden kann.

Die Weiterbildung nach dem Anspruch 2 hat den Vorteil, daß der große Zeichenvorrat des Teletex-Systems ausgenutzt werden kann und daß ein zusätzlicher Anschluß der Funkrufzentrale an das Telex-Netz entbehrlich ist und trotzdem über die bestehende Übergangsmöglichkeit vom Telex-Netz auf das Teletex-Netz an Teilnehmerstationen des Telex-Netzes Rufaufträge eingegeben werden können.

Die Weiterbildung nach dem Anspruch 3 kommt dann in Frage, wenn ein Anschluß an das Teletex-Netz nicht möglich ist, z.B. weil dieser Dienst noch nicht eingerichtet ist. Aber auch bei einem bestehenden Teletex-Netz wäre es möglich, die Funkrufzentrale nur an das Telex-Netz anzuschließen. Über die Übergangsmöglichkeit zwischen beiden Netzen könnten dann auch an den Teilnehmerstationen des Teletex-Netzes Rufaufträge eingegeben werden, allerdings mit dem Nachteil, daß der große Zeichenvorrat des Teletex-Netzes nicht ausgenutzt werden kann.

Durch die Weiterbildung nach dem Patentanspruch 4 wird erreicht, daß in dem Datenvermittlungssystem keinerlei Anpassungsmaßnahmen zum Anschluß der Funkrufzentrale notwendig sind.

Durch die Weiterbildung nach dem Anspruch 5 können Privathaushalte, für die das Bildschirmtext-System hauptsächlich bestimmt ist, Rufaufträge mit alphanumerischer Information an ihren Bildschirmtext-Teilnehmerstationen eingeben.

Durch die Weiterbildung nach dem Anspruch 6 wird erreicht, daß im Bildschirmtext-Netz keine Anpassungsmaßnahmen zum Anschluß der Funkrufzentrale notwendig ist.

Durch die Weiterbildung nach dem Anspruch 7 wird erreicht, daß sowohl Gewerbe- und Handelsbetriebe über das für sie bestimmte Teletex-Netz als auch Privatpersonen über das Bildschirmtext-Netz Rufaufträge mit alphanumerischer Anzeige der Information für die gerufene Person eingeben können.

Die Weiterbildung nach dem Patentanspruch 8 vermeidet Anpassungsmaßnahmen im Teletex- und im Bildschirmtext-Netz.

Die Erfindung wird anhand von drei Ausführungsbeispielen und drei Figuren beschrieben, welche gemäß folgender Tabelle den Patentansprüchen zugeordnet sind.

| Ausführungsbeispiel | ·Anspruch | Figur |
|---|---|---|
| 1 | 1...4 | 1 |
| 2 | 5, 6 | 2 |
| 3 | 7, 8 | 3 |

Das Ausführungsbeispiel 1 des erfindungsgemäßen Personen-Funkrufsystems besteht aus der Funkrufzentrale FZ, die die Anpassungsübertragungen $AP_F$ und $AP_D$ aufweist, einem an diese angeschlossenen Funkrufsender FS und den mit diesem über einen Funkkanal in Funkkontakt stehenden, von den zu rufenden Personen mitgeführten Funkrufempfänger FE. Es sind zwei verschiedene Anpassungsübertragungen vorgesehen, nämlich die $AP_F$ zum Anschluß an ein Fernsprechwählvermittlungsnetz und die $AP_D$ zum Anschluß an das Datenvermittlungsnetz. Es ist hier von jeder Art nur eine Anpassungsübertragung gezeichnet, es können jedoch von jeder Art auch mehrere vorgesehen sein. Je nach den Funk-Ausbreitungsbedingungen und der Größe des zu überdeckenden Bereiches genügt ein einziger Funkrufsender, oder es müssen deren mehrere an die Funkrufzentrale angeschlossen werden.

Das Fernsprechwählvermittlungsnetz ist durch eine Fernsprechvermittlungsstelle FVst und das Datenvermittlungs-Netz durch eine Daten-Vermittlungsstelle DVst angedeutet. An die Fernsprechvermittlungsstelle FVst sind die Fernsprechapparate $F_1$ bis $F_m$ angeschlossen. An die Daten-Vermittelungsstelle DVst sind die Teilnehmerstationen $D_1...D_p$ angeschlossen.

Die Funktionen bei der Eingabe von Rufaufträgen an einem Fernsprechapparat sind die gleichen wie in dem Funk-Personenrufsystem gemäß der deutschen Offenlegungsschrift 31 23 617, d.h. , wenn eine Person gerufen werden soll, so wählt die rufende Person von einem der Fernsprechapparate $F_1...F_m$ die Kennzahl der Funkrufzentrale FZ. Dadurch wird eine Fernsprechverbindung von diesem Fernsprechapparat über das Fernsprechwählvermittlungsnetz FVst zu der Anpassungsübertragung $AP_F$ in der Funkrufzentrale FZ hergestellt. Anschließend wählt die rufende Person die Rufnummer der zu rufenden Person und eine Ziffernfolge mit der vereinbarten Bedeutung zur Information für die zu rufende Person. Diese Rufnummer und diese Ziffernfolge werden über die Fernsprechverbindung an die Funkrufzentrale FZ übertragen. Diese sendet ein Rufsignal über den Funkrufsender FS an den betreffenden Funkrufempfänger FE aus, welches die Information für die gerufene Person enthält. Die Information wird in einem Speicher des Funkrufempfängers FE gespeichert und an dessen Anzeigefeld angezeigt. Außerdem ertönt ein Rufzeichen. Durch die Speicherung wird erreicht, daß die Anzeige auch nach dem Ende des Rufsignals, also nach dem Freiwerden des Funkkanals, noch sichtbar ist. Die Speicherung und Anzeige wird durch Handbedienung oder ein neues Rufsignal für diesen Funkrufempfänger gelöscht.

Soll von einer der Daten-Teilnehmerstationen $D_1...D_p$ ein Rufauftrag eingegeben werden, so wird von

3

dieser Daten-Teilnehmerstation auch zunächst durch Wahl der Kennzahl der Funkrufzentrale FZ eine Verbindung zu einer der in dieser vorgesehenen Anpassungsübertragungen $AP_D$ aufgebaut. Anschließend wird an der alphanumerischen Tastatur dieser Daten-Teilnehmerstation die Rufnummer der zu rufenden Person und der Text für die Information der zu rufenden Person eingegeben. Wie bei der Eingabe von einem Fernsprechapparat wird jetzt wieder ein Rufsignal an den betreffenden Funkrufempfänger ausgesandt, welches in diesem auch die gleichen Funktionen auslöst.

Da alle Einrichtungen in den Anpassungsübertragungen $AP_D$, in der Funkrufzentrale FZ, im Funkrufsender FS und in den Funkrufempfängern FE, welche zur Übertragung, Speicherung bzw. Anzeige der Information für die zu rufenden Person vorgesehen sind, zur Verarbeitung von alphanumerischen Zeichen ausgestaltet sind, können solche Informationen nicht nur Ziffernfolgen sondern auch Buchstaben, Worte sowie Satz- und Sonderzeichen aufweisen. In der Funkrufempfängern sind es insbesondere die Speicher und Anzeigefelder für die Information der zu rufenden Person, welche zur Verarbeitung alphanumerischer Zeichen ausgestaltet sind.

Die Anpassungsübertragungen $AP_D$ sind wie Endeinrichtungen, d.h. wie Daten-Teilnehmerstationen, an das Datenvermittlungsnetz DVst angeschlossen und führen gegenüber diesem alle Funktionen einer solchen Endeinrichtung aus, welche zum Aufbau und Trennen einer Verbindung in diesem Datenvermittlungsnetz notwendig sind. Wird als Datenvermittlungsnetz das Teletex-Netz benutzt und sind die Anpassungsübertragungen $AP_D$ an dieses angeschlossen, so sind sie zur Ausführung der Funktionen eines Teletex-Endgerätes ausgestaltet. Der Teletex-Dienst ist in den Nachrichtentechnischen Fachberichten, Band 74, VDE-Verlag Berlin, auf den Seiten 9 bis 46 und in den Unterrichtsblättern der Deutsche Bundespost, Jg. 36/1983, Nr. 9, Seite 355 bis 364 beschrieben. Wird jedoch das Telex-(Fernschreib-)Netz benutzt, so sind die Anpassungsübertragungen $AP_D$ für die Ausführung der Funktionen eines Fernschreibapparates ausgestaltet.

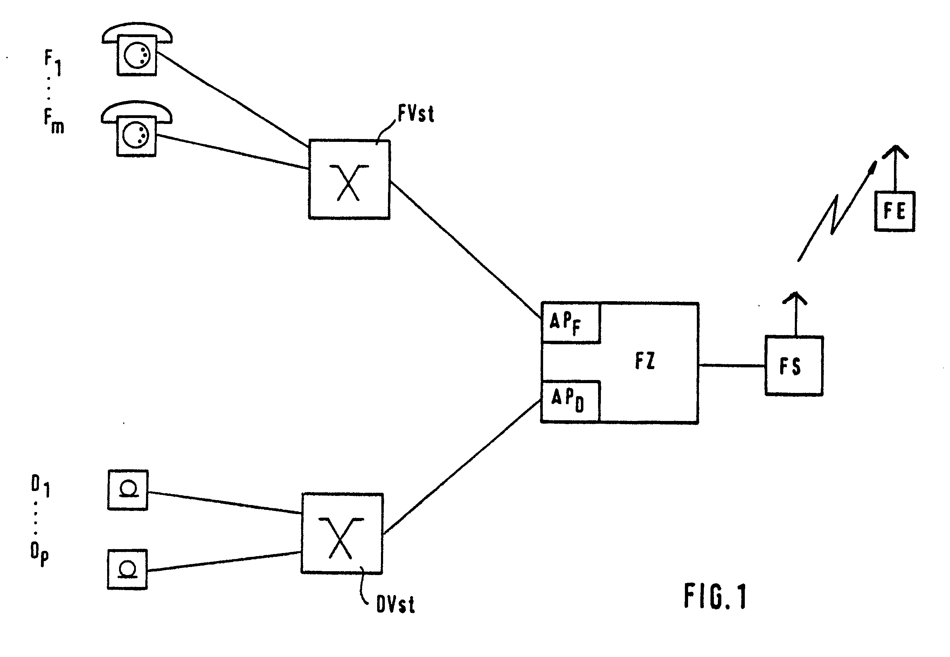

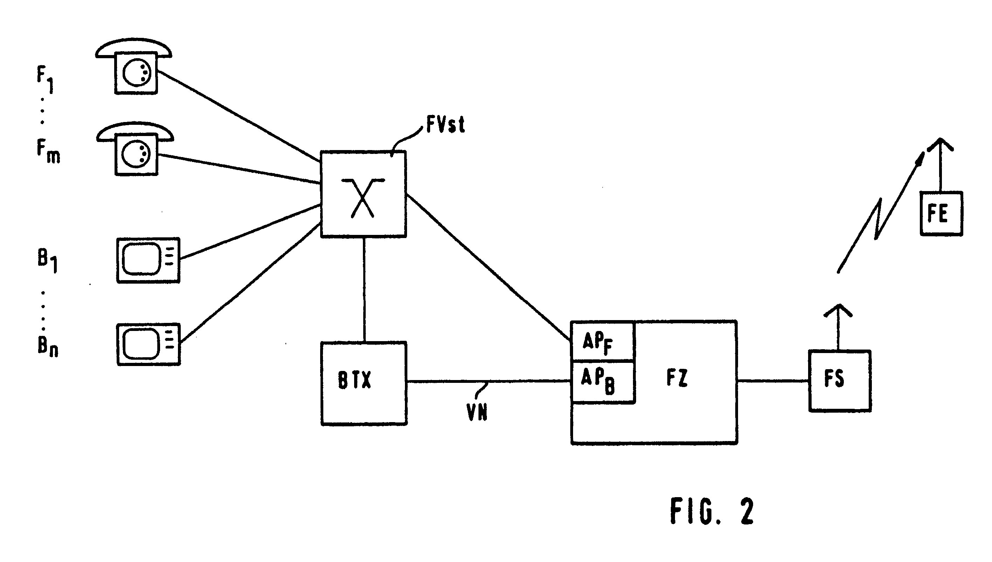

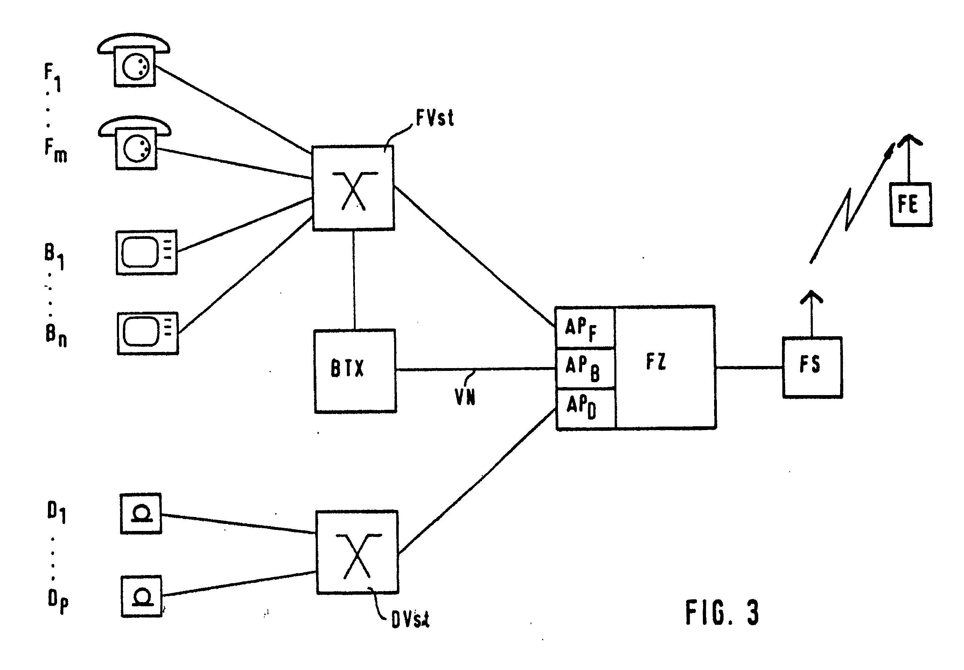

Beim Ausführungsbeispiel 2 werden die Rufaufträge über das Bildschirmtext-Netz eingegeben. Das Bildschirmtext-Netz ist in den schon erwähnten Nachrichtentechnischen Fachberichten auf den Seiten 118 bis 155 und in demselben Jahrgang der schon erwähnten Unterrichtsblätter Nr. 8, Seite 345 bis 350 beschrieben. An das Fernsprechwählvermittlungsnetz FVst sind außer den Fernsprechapparaten $F_1...F_m$ die Bildschirmtext-Teilnehmerstationen mit alphanumerischen Tastaturen $B_1... B_n$ angeschlossen, wie in der Figur 2 dargestellt ist. Das Bildschirmtext-Netz besteht aus mehreren Bildschirmtext-Vermittlungsstellen, einer Bildschirmtextzentrale, den "Externen Rechnern" und den diese Einrichtungen untereinander und mit dem Fernsprechwählvermittlungsnetz verbindenden Daten- bzw. Verbindungsnetzen. In der Figur 2 sind diese Einrichtungen durch den Block BTX angedeutet. Die Verbindung des Fernsprechwählvermittlungsnetzes FVst mit dem Bildschirmtext-Netz BTX ist durch eine nicht bezeichnete Linie angedeutet.

Die Funkrufzentrale FZ weist außer den Anpassungsübertragungen $AP_F$ noch eine oder mehrere Anpassungsübertragungen $AP_B$ auf. Diese sind über ein Verbindungsnetz VN mit dem Bildschirmtext-Netz BTX verbunden und sind so ausgestaltet, damit sie gegenüber diesem wie "Externe Rechner" funktionieren.

Der Funkrufsender FS und die Funkrufempfänger FE gleichen denen des Ausführungsbeispiels 1. Auch die Funktionen bei der Eingabe von Rufaufträgen an den Fernsprechapparaten $F_1$ bis $F_m$ sind die gleichen wie beim Ausführungsbeispiel 1.

Bei der Eingabe eines Rufauftrages an einer Bildschirmtext-Teilnehmerstation wird zunächst eine Verbindung von dieser über das Fernsprechwählvermittlungsnetz FVst und das Bildschirmtext-Netz BTX zur Anpassungsübertragung $AP_B$ hergestellt. Dies geschieht wie die Anforderung einer Bildschirmtext-Seite von einem "Externen Rechner". Es wird also der rufenden Person eine Seite "Personenruf" übermittelt, in die sie mit ihrer alphanumerischen Tastatur die Rufnummer und den alphanumerischen Text zur Information der zu rufenden Person einträgt. Die so eingegebenen Daten werden an die Anpassungsübertragung $AP_B$ in der Funkrufzentrale FZ übertragen. Dazu ist die Anpassungsübertragung zur Verarbeitung von alphanumerischem Text eingerichtet. Das Aussenden des Rufsignals und die weiteren Funktionen sind die gleichen wie bei der Eingabe an einer Daten-Teilnehmerstation.

Im Ausführungsbeispiel 3 ist die Funkrufzentrale FZ, wie im Ausführungsbeispiel 1 beschrieben, an ein Fernsprechwählvermittlungsnetz FVst und an ein Datenvermittlungsnetz DVst und zusätzlich noch, wie im Ausführungsbeispiel 2 beschrieben, an das Bildschirmtext-Netz BTX angeschlossen. Dementsprechend sind die Funktionen ebenfalls die gleichen wie die im Ausführungsbeispiel 1 bzw. 2.

Die in den Ausführungsbeispielen 1 bis 3 erwähnten Teletex-, Telex- und Bildschirmtext-Netze sind öffentliche Netze. Das erfindungsgemäße Funk-Personenrufsystem kann aber auch an private Daten- und Fernsprechnetze sowie Nebenstellenanlagen angeschlossen werden, wenn die Funkrufzentrale mit entsprechend ausgestalteten Anpassungsübertragungen ausgestattet wird.

**Patentansprüche**

1. Funk-Personenrufsystem, bestehend aus einer Funkrufzentrale (FZ), mindestens einem an diese angeschlossenen Funkrufsender (FS) und den mit diesem in Funkkontakt stehenden, von den zu rufenden Personen mitgeführten Funkrufempfängern (FE), wobei die Funkrufzentrale (FZ) Anpassungsübertragungen zum Anschluß an ein Nachrichtenvermittlungsnetz aufweist, wobei die Rufaufträge an den Teilnehmergeräten des Nachrichtenvermittlungsnetzes eingegeben werden und wobei nach der Eingabe des Rufauftrages eine Information für die zu rufende Person eingegeben werden kann, welche über das Nachrichtenvermittlungsnetz, die Anpassungsübertragungen, die Funkrufzentrale und die Funkrufsender an den betreffenden Funkrufempfänger übertragen, im Funkrufempfänger in einem Speicher gespeichert und an einem Anzeigefeld angezeigt wird, wobei Anpassungsübertragungen einer ersten Art (AP$_F$) vorgesehen sind, welche zum Anschluß an ein als Fernsprechwählvermittlungsnetz (FVst) ausgeführtes Nachrichtenvermittlungsnetz ausgestaltet und an dieses angeschlossen sind, dadurch gekennzeichnet, daß die Funkrufzentrale (FZ) Anpassungsübertragungen mindestens einer weiteren Art (AP$_D$, Figur 1) aufweist, welche für den Anschluß an ein als Datenvermittlungsnetz (DVst) ausgeführtes Nachrichtenvermittlungsnetz ausgebildet und an ein solches angeschlossen sind, und daß die Anpassungsübertragungen der weiteren Art (AP$_D$), die Funkrufzentrale (FZ), die Funkrufsender (FS), die Funkrufempfänger (FE), ihre Speicher und ihre Anzeigefelder zur Übertragung, Speicherung bzw. Anzeige von alphanumerischem Text zur Information für die zu rufende Person ausgestaltet sind.

2. Funk-Personenrufsystem nach Anspruch 1, dadurch gekennzeichnet, daß die Anpassungsübertragungen der weiteren Art (AP$_D$, Figur 1) zum Anschluß an das Teletex-Netz als Datenvermittlungsnetz (DVst) ausgebildet und an das Teletex-Netz angeschlossen sind.

3. Funk-Personenrufsystem nach Anspruch 1, dadurch gekennzeichnet, daß die Anpassungsübertragungen der weiteren Art (AP$_D$, Figur 1) zum Anschluß an das Telex-Netz als Datenvermittlungsnetz (DVst) ausgebildet und an das Telex-Netz angeschlossen sind.

4. Funk-Personenrufsystem nach Anspruch 1, 2 oder 3, dadurch gekennzeichnet, daß die Anpassungsübertragungen der weiteren Art (AP$_D$, Figur 1) wie Endgeräte an das jeweilige Datenvermittlungsnetz (DVst) angeschlossen und so ausgebildet sind, damit sie gegenüber dem Datenvermittlungsnetz (DVst) die Funktionen eines Endgerätes ausführen.

5. Funk-Personenrufsystem nach Anspruch 1, dadurch gekennzeichnet, daß die Anpassungsübertragungen der weiteren Art (AP$_B$, Figur 2) zum Anschluß an das Bildschirmtext-Netz (BTX) als Datenvermittlungsnetz ausgebildet und an das Bildschirmtext-Netz (BTX) angeschlossen sind.

6. Funk-Personenrufsystem nach Anspruch 5, dadurch gekennzeichnet, daß die Anpassungsübertragungen der weiteren Art (AP$_B$, Figur 2) wie "Externe Rechner" an das Bildschirmtext-Netz (BTX) angeschlossen und so ausgebildet sind, damit sie gegenüber dem Bildschirmtext-Netz (BTX) und einem die "Externen Rechner" mit dem Bildschirmtext-Netz (BTX) verbindenden Verbindungsnetz (VN) die Funktionen eines "Externen Rechners" ausführen.

7. Funk-Personenrufsystem nach Anspruch 1, dadurch gekennzeichnet, daß von den Anpassungsübertragungen der weiteren Art eine zweite (AP$_B$, Figur 3) und dritte (AP$_D$, Figur 3) Art vorgesehen ist, wobei die Anpassungsübertragungen der zweiten Art (AP$_B$) zum Anschluß an das Bildschirmtext-Netz (BTX) ausgebildet und an dieser angeschlossen sind und die Anpassungsübertragungen der dritten Art (AP$_D$> zum Anschluß an das Teletex-Netz (DVst) ausgebildet und an dieses angeschlossen sind.

8. Funk-Personenrufsystem nach Anspruch 7, dadurch gekennzeichnet, daß die Anpassungsübertragungen der zweiten Art (AP$_B$, Figur 3) wie "Externe Rechner" an das Bildschirmtext-Netz (BTX) anschlossen und so ausgebildet sind, damit sie gegenüber dem Bildschirmtext-Netz (BTX) und einem die "Externen Rechner" mit dem Bildschirmtext-Netz (BTX) verbindenden Verbindungsnetz (VN) die Funktionen eines "Externen Rechners" ausführen, und daß die Anpassungsübertragungen der dritten Art (AP$_D$, Figur 3) wie Endgeräte an das Teletex-Netz (DVst) angeschlossen und so ausgebildet sind, damit sie gegenüber dem Teletex-Netz (DVst) die Funktionen eines Endgerätes ausführen.

**Claims**

1. Personal radio paging system consisting of a radio paging exchange (FZ), at least one radio paging transmitter (FS) connected to this and the radio paging receivers (FE), which stand in radio contact therewith and are taken along by the persons to be paged, wherein the radio paging exchange (FZ) displays adapting transmissions for connection to a message-communicating network, wherein the paging orders are entered at the subscriber sets of the message-communicating network and wherein - after the input of a paging order - an information for the person to be paged can be entered, which information can be transmitted by way of the message-communicating network, the adapting transmissions, the radio paging exchange and the radio paging transmitters to the radio paging receiver concerned, be stored in a store and indicated at an indicating field in the radio paging receiver, wherein adapting transmissions of a first kind ($AP_F$) are provided, which are structured for connection to a message-communicating network executed as telephone selector exchange network (FVst) and connected to this message-communicating network, characterised thereby, that the radio paging exchange (FZ) displays adapting transmissions of at least one further kind ($AP_D$, Figure 1), which are structured for connection to a message-communicating network executed as data communications network (DVst) and connected to such a message-communication network and that the adapting transmissions of the further kind ($AP_D$), the radio paging exchange (FZ), the radio paging transmitters (FS), the radio paging receivers (FE), their stores and their indicating fields are structured for the transmission, storage or indication of alpha-numeric text for the information of the person to be paged.

2. Personal radio paging system according to claim 1, characterised thereby, that the adapting transmissions of the further kind ($AP_D$, Figure 1) are formed for connection to the teletext network as data communications network (DVst) and connected to the teletext network.

3. Personal radio paging system according to claim 1, characterised thereby, that the adapting transmission of the further kind ($AP_D$,Figure 1) are formed for connection to the teletext network as data communications network (DVst) and connected to the teletext network.

4. Personal radio paging system according to claim 1, 2 or 3, characterised thereby, that the adapting transmissions of the further kind ($AP_D$, Figure 1), such as terminal apparatus, are connected to the respective data communications network (DVst) and so constructed that they perform the functions of a terminal apparatus in relation to the data communications network (DVst).

5. Personal radio paging system according to claim 1, characterised thereby, that the adapting transmissions of the further kind ($AP_B$, Figure 2) are formed as data communications network (DVst) for connection to the image screen text network (BTX) and connected to the image screen text network (BTX).

6. Personal radio paging system according to claim 5, characterised thereby, that the adapting transmissions of the further kind ($AP_B$, Figure 2), such as "external computers", are connected to the image screen text network (BTX) and so constructed that they perform the functions of an "external computer" in relation to the image screen text network (BTX) and a connecting network (VN), which connects the "external computers" with the image screen text network (BTX).

7. Personal radio paging system according to claim 1, characterised thereby, that a second ($AP_B$, Figure 3) and a third ($AP_D$, Figure 3) kind of the adapting transmissions of the further kind are provided, wherein the adapting transmissions of the second kind ($AP_B$) are formed for connection to the image screen text network (BTX) and connected to this and the adapting transmissions of the third kind ($AP_D$) are formed for connection to the teletext network (DVst) and connected to this.

8. Personal radio paging system according to claim 7, characterised thereby that, the adapting transmissions of the second kind ($AP_B$,Figure 3), such as "external computers", are connected to the image screen text network (BTX) and so constructed that they perform the functions of an "external computer" in relation to the image screen text network (BTX) and a connecting network (VN), which connects the "external computers" with the image screen text network (BTX), and that the adapting transmissions of the third kind ($AP_D$, Figure 3) are connected like terminal apparatus to the teletext network (DVst) and so constructed that they perfom the functions of a terminal apparatus in relation to the teletext network (DVst).

**EP 0 163 095 B1**

**Revendications**

1. Système hertzien d'appel de personnes, constitué par un central d'appel hertzien (FZ), par au moins un émetteur d'appel hertzien (FS) relié à celui-ci et par des récepteurs d'appel hertzien (FE) se trouvant en contact hertzien avec ce dernier et transportés par les personnes à appeler, le central d'appel hertzien (FZ) présentant des transmissions-adaptations pour le raccordement à un réseau téléphonique automatique, les ordres d'appel étant introduits dans les appareils des abonnés du réseau téléphonique automatique et une information pour l'appelé pouvant être introduite après l'introduction de l'ordre d'appel, cette information étant transmise via le réseau téléphonique automatique, les transmissions-adaptations, le central d'appel hertzien et l'émetteur d'appel hertzien, au récepteur d'appel hertzien concerné, mémorisée dans une mémoire dans le récepteur d'appel hertzien et indiquée sur un champ d'affichage, des transmissions-adaptations d'un premier type ($AP_F$) étant prévues, lesquelles sont conçues-réalisées pour le raccordement à un réseau de communication de données réalisé en tant que réseau téléphonique automatique (FVst) et sont raccordées à celui-ci, caractérisé par le fait que le central d'appel hertzien (FZ) présente des transmissions-adaptations d'au moins un autre type ($AP_D$, figure 1), lesquelles sont conçues-réalisées pour le raccordement à un réseau de transmission d'informations réalisé en tant que réseau de communication de données (DVst), et sont raccordées à un tel réseau, et par le fait que les transmissions-adaptations de l'autre type ($AP_D$), le central d'appel hertzien (FZ), l'émetteur d'appel hertzien (FS), les récepteurs d'appel hertzien (FE), leurs mémoires et leurs champs d'affichage sont conçus-réalisés pour la transmission, la mémorisation et/ou l'affichage de texte alphanumérique pour l'information de l'appelé.

2. Système hertzien d'appel de personnes selon revendication 1, caractérisé par le fait que les transmissions-adaptations de l'autre type ($AP_D$, figure 1) pour le raccordement au réseau teletex sont conçues-réalisées en tant que réseau de communication de données (DVst) et raccordées au réseau teletex.

3. Système hertzien d'appel de personnes selon revendication 1, caractérisé par le faim que les transmissions-adaptations de l'autre type ($AP_D$, figure 1) pour le raccordement au réseau télex sont réalisées en tant que réseau de communication de données (DVst) et raccordées au réseau télex.

4. Système hertzien d'appel de personnes selon revendication 1, 2 ou 3, caractérisé par le fait que les transmissions-adaptations de l'autre type ($AP_D$, figure 1) sont raccordées, comme des appareils terminaux, au réseau de communication de données concerné (DVst) et sont conçues-réalisées afin d'accomplir vis-à-vis du réseau de communication de données (DVst) les fonctions d'un appareil terminal.

5. Système hertzien d'appel de personnes selon revendication 1, caractérisé par le fait que les transmissions-adaptations de l'autre type ($AP_B$, figure 2) pour le raccordement au réseau écran-texte (BTX) sont conçues-réalisées en tant que réseau de communication de données et sont raccordées au réseau écran-texte (BTX).

6. Système hertzien d'appel de personnes selon revendication 5, caractérisé par le fait que les transmissions-adaptations de l'autre type ($AP_B$, figure 2) sont raccordées comme des "calculateurs externes" au réseau écran-texte (BTX) et sont réalisées de manière à accomplir les fonctions d'un "calculateur externe" vis-à-vis du réseau écran-texte (BTX) et d'un réseau de liaison (VN) reliant les "calculateurs externes".

7. Système hertzien d'appel de personnes selon revendication 1, caractérisé par le fait qu'il est prévu, parmi les transmissions-adaptations de l'autre type, un deuxième type ($AP_B$, figure 3) et un troisième ($AP_D$, figure 3), les transmissions-adaptations du deuxième type ($AP_B$) étant conçues-réalisées pour le raccordement au réseau écran-texte (BTX) et lui étant raccordées, et les transmissions-adaptations du troisième type ($AP_D$), étant conçues-réalisées pour le raccordement au réseau teletex (DVst) et lui étant raccordées.

8. Système hertzien d'appel de personnes selon revendication 7, caractérisé par le fait que les transmissions-adaptations du deuxième type ($AP_B$, figure 3) sont raccordées comme des "calculateurs externes" au réseau écran-texte (BTX) et sont conçues-réalisées de manière à accomplir les fonctions

7

EP 0 163 095 B1

d'un "calculateur externe" vis-à-vis du réseau écran-texte (BTX) et d'un réseau de liaison (VN) reliant les "calculateurs externes" au réseau écran-texte (BTX), et par le fait que les transmissions-adaptations du troisième type ($AP_D$, figure 3) sont raccordées comme des appareils terminaux au réseau teletex (DVst) et sont conçues-réalisées de manière à accomplir les fonctions d'un appareil terminal vis-à-vis du réseau teletex (DVst).

FIG.1

EP 0 163 095 B1

FIG. 2

FIG. 3

EP 0 163 095 B1